Europäisches Patentamt

European Patent Office

Office européen des brevets

(19)

(11)     **EP 1 177 836 B1**

(12)     **EUROPÄISCHE PATENTSCHRIFT**

(45) Veröffentlichungstag und Bekanntmachung des Hinweises auf die Patenterteilung:
**11.05.2005   Patentblatt 2005/19**

(51) Int Cl.[7]: **B05D 1/28**, B05D 5/10

(21) Anmeldenummer: **01117896.9**

(22) Anmeldetag: **24.07.2001**

(54) **Verfahren zum Auftragen von Schmelzhaftklebern auf ein Trägermaterial**

Process for applying hot melt adhesives on a carrier

Pprocédé pour l'application d'adhésifs thermofusibles sur un support

(84) Benannte Vertragsstaaten:
**AT BE CH CY DE DK ES FI FR GB GR IE IT LI LU MC NL PT SE TR**

(30) Priorität: **02.08.2000   DE 10037549**

(43) Veröffentlichungstag der Anmeldung:
**06.02.2002   Patentblatt 2002/06**

(73) Patentinhaber: **Beiersdorf AG**
**20253 Hamburg (DE)**

(72) Erfinder:
 • **von Wolff, Axel**
   **21447 Hamburg (DE)**
 • **Godersky, Stefan**
   **22529 Hamburg (DE)**
 • **Mayan, Robert, Dr.**
   **21614 Buxtehude (DE)**
 • **Kummer Andreas B., Dr.**
   **21079 Hamburg (DE)**

(56) Entgegenhaltungen:
   **EP-A- 0 356 777         EP-A- 0 922 502**
   **WO-A-93/14725          US-A- 4 020 194**

## Beschreibung

Die Erfindung betrifft Verfahren zum partiellen Auftragen von einer Schmelzhaftklebemasse auf ein Trägermaterial.

Bekannt sind im medizinischen Bereich Substrate, die mit hochviskosen Materialien beschichtet werden. Unter bestimmten Gesichtspunkten ist es sinnvoll, daß diese Beschichtungen keine geschlossenen Oberflächen aufweisen, sondern punktförmig aufgetragen werden, was zum Beispiel erlaubt, daß die Haut unter Bandagen auf Grund der Austrittsmöglichkeit von Schweiß und sonstigen Ausscheidungen der Haut nicht mazeriert. Ein adäquates Verfahren, um diese punktförmige Beschichtung zu erreichen, stellt der Rotationssiebdruck dar.

In diesem Verfahren befindet sich im Inneren eines rotierenden Siebs eine Düse über die von außen her das zu beschichtende Fluid in den Siebraum eingebracht und durch die Sieblöcher in Richtung des zu beschichtenden Substrats hindurchgedrückt wird. Entsprechend der Transportgeschwindigkeit des Substrats (Rotationsgeschwindigkeit der Siebtrommel) wird das Sieb vom Substrat abgehoben. Bedingt durch die Adhäsion und die innere Kohäsion des Fluids wird von der auf dem Träger bereits haftenden Basis der Kalotten der in den Löchern begrenzte Vorrat an Heißschmelzklebemasse konturenscharf abgezogen beziehungsweise durch den bestehenden Druck auf den Träger gefördert.

Nach Beendigung dieses Transportes formt sich, abhängig von der Rheologie des Fluids, über der vorgegebenen Basisfläche die mehr oder weniger stark gekrümmte Oberfläche der Kalotte. Das Verhältnis Höhe zur Basis der Kalotte hängt vom Verhältnis Lochdurchmesser zur Wandstärke der Siebtrommel und den physikalischen Eigenschaften (Fließverhalten, Oberflächenspannung und Benetzungswinkel auf dem Trägermaterial) des Fluids ab.

Als Substratmaterialien sind bereits zahlreiche Materialien auf Folien-, Gewebe-, Gewirke-, Vlies-, Gel- oder Schaumstoffbasis vorbeschrieben und werden auch in der Praxis eingesetzt. Auf dem medikalen Sektor stellen sich besondere Anforderungen an die Trägermaterialien. Die Materialien müssen hautverträglich, in der Regel luft- und/oder wasserdampfdurchlässig sowie gut anmodellierbar und anschmiegsam sein. Aufgrund dieser Anforderungen wird häufig ein möglichst dünner oder weicher Träger bevorzugt. Zur Handhabung und beim Gebrauch ist bei den Trägermaterialien aber auch eine ausreichende Festigkeit und gegebenenfalls begrenzte Dehnbarkeit gefordert. Weiterhin sollte das Trägermaterial auch nach dem Durchnässen eine ausreichende Festigkeit und geringe Dehnbarkeit aufweisen.

Es ist in der Textilindustrie auch bekannt, daß partielle Beschichtungen transferiert werden können. EP 0 675 183 A1 beschreibt ein Verfahren, welches Schmelzklebergeometrien auf einen speziell vernetzten Untergrund transferiert. In EP 0 356 777 A1 wird ebenfalls ein dehäsiv ausgerüsteter Zwischenträger erwähnt. Auch der Einsatz einer beschichteten Gegendruckwalze als Hilfsträger für den Transfer wird beschrieben (CH 648 497 A5), wobei hier nicht auf selbstklebende Produkte eingegangen wird.

Die Ausführung von Düse und Sieb wird in CH 648 497 A5 grundlegend beschrieben, Verbesserungen des Verfahrens werden in EP 0 288 541 A1, EP 0 565 133 A1, EP 0 384 278 A1 und DE 42 31 743 A1 beschrieben.

Weiterhin ist aus der EP 0 622 127 B1 bekannt, daß über eine Walze druckempfindliche, lösungsmittelfreie Klebstoffschichten auf ein Substrat aufgelegt werden. Als Auftragswerk kommen Ein- oder Mehrkanaldüsen zum Einsatz.

Hervorgerufen durch eine angelegte Differenzgeschwindigkeit zwischen der beschichteten Walze oder dem abnehmenden Substrat wird der vordosierte Klebstofffilm in seiner Dicke reduziert, so daß dünne Haftklebeschichten auf Substrate transferiert werden können. Allerdings wird stets Wert darauf gelegt, daß die dünnen Haftklebeschichten ohne Fehlstellen geschlossen sind, um eine einheitliche Qualität des Produkts zu gewährleisten.

Weiterhin üblich ist, gerade bei Beschichtungen von medizinischen Trägermaterialien, den Träger mit einem geschlossenen Massefilm zu versehen, der anschließend in einem zusätzlichen Verfahrensschritt mittels Druckluft, Stachelwalze oder Laser perforiert wird.

Aufgabe der Erfindung ist es, ein Verfahren zur Verfügung zu stellen, daß hervorragend geeignet ist, einen Schmelzhaftkleber so auf ein Trägermaterial aufzubringen, daß das somit beschichtete Trägermaterial bei seiner Applikation als Pflaster verbesserte Eigenschaften aufweist bezüglich der Atmungsaktivität beziehungsweise Wasserdampfdurchlässigkeit.

Gelöst wird diese Aufgabe durch Verfahren, wie sie im Hauptanspruch beschrieben sind. Die Unteransprüche betreffen vorteilhafte Fortbildungen des Erfindungsgegenstands.

Demgemäß beschreibt die Erfindung ein Verfahren zum partiellen Auftragen von einer Schmelzhaftklebemasse auf ein Trägermaterial, wobei

- die Schmelzhaftklebemasse mittels einer Auftragsvorrichtung so auf eine sich bewegende Übertragungsvorrichtung aufgebracht wird, daß ein aus der Schmelzklebemasse gebildeter Film Fehlstellen aufweist,
- der aufgelegte Film anschließend auf ein sich ebenfalls bewegendes Trägermaterial aufgebracht wird.

Dann umfaßt der Erfindungsgegenstand ein Verfahren zum partiellen Auftragen von einer Schmelzhaftklebemasse auf ein Trägermaterial, wobei die Schmelzhaftklebemasse mittels einer Auftragsvorrichtung so auf ein sich bewegendes Trägermaterial aufgebracht wird, daß ein aus der Schmelzklebemasse gebildeter Film Fehlstellen aufweist.

Besonders vorteilhaft ist die Auftragsvorrichtung in Form einer Breitschlitzdüse oder Rollstabdüse und/oder die Übertragungsvorrichtung in Form einer Walze ausgebildet .

Bei der Übertragung des Massefilms auf ein sich bewegendes Trägermaterial oder eine Übertragsvorrichtung tritt eine mechanische Belastung des Massefilms auf. Insbesondere treten Zug- und Scherkräfte auf, die proportional zur Geschwindigkeitsdifferenz zwischen Massestrom und Trägermaterial oder Übertragsvorrichtung sind. Diese auftretenden Kräfte werden durch Wahl der Verfahrensparameter so eingestellt, daß der Massefilm über seine Reißgrenze gedehnt wird und aufreißt.

Die Reißkraft und -dehnung eines Films aus viskoelastischem Schmelzhaftkleber hängt von einer Vielzahl von Parametern ab. Der Bereich der Kräfte, durch welche ein erfindungsgemäßes Beschichtungsbild erzielt wird, kann wie folgt eingegrenzt werden:

Sind die durch Geschwindigkeitsdifferenz auftretenden Kräfte zu niedrig, wird der Massefilm nur gedehnt und verstreckt, ohne daß Fehlstellen erzeugt werden.

Sind die auftretenden Kräfte zu hoch, reißt der Massefilm vollständig ab und einzelne, diskrete Massestücke werden auf dem Trägermaterial oder der Übertragsvorrichtung abgelegt.

Innerhalb des so definierten "Fensters" läßt sich der Anteil von Masse bedeckter zu unbedeckter Fläche durch Wahl der Verfahrensparameter, insbesondere der Geschwindigkeitsdifferenz, einstellen.

Größe und Lage dieses "Fensters" werden durch folgende Parameter des Beschichtungsverfahrens bestimmt:

- viskoelastische Eigenschaften des Schmelzhaftklebers
- Temperatur des Schmelzhaftklebers
- Temperatur des Trägermaterials oder der Übertragsvorrichtung
- Räumliche Anordnung der Auftragsvorrichtung relativ zu Gegendruckwalze oder Übertragsvorrichtung
- Geometrie der Auftragsvorrichtung
- Fließgeschwindigkeit des Schmelzhaftklebers
- Bahngeschwindigkeit des Trägermaterials bzw. Geschwindigkeit der Übertragsvorrichtung.

Vorteilhafterweise werden thermoplastische Heißschmelzklebemassen eingesetzt auf Basis natürlicher und synthetischer Kautschuke und anderer synthetischer Polymere wie beispielhaft Acrylate, Methacrylate, Polyurethane, Polyolefine, Polyvinylderivate, Polyester oder Silikone mit entsprechenden Zusatzstoffen wie Klebharzen, Weichmachern, Stabilisatoren und anderen Hilfsstoffen soweit erforderlich.

Ihr Erweichungspunkt sollte höher als 50 °C liegen, da die Applikationstemperatur in der Regel mindestens 90 °C beträgt, bevorzugt zwischen 100 °C und 180 °C, beziehungsweise 180 °C und 220 °C bei Silikonen. Gegebenenfalls kann eine Nachvemetzung durch UV- oder Elektronenstrahlen-Bestrahlung angebracht sein, um besonders vorteilhafte Eigenschaften der Heißschmelzklebemassen einzustellen.

Insbesondere Heißschmelzklebemassen auf Basis von Blockcopolymeren zeichnen sich durch ihre vielfältigen Variationsmöglichkeiten aus, denn durch die gezielte Absenkung der Glasübergangstemperatur der Selbstklebemasse infolge der Auswahl der Klebrigmacher, der Weichmacher sowie der Polymermolekülgröße und der Molekulargewichtsverteilung der Einsatzkomponenten wird die notwendige funktionsgerechte Verklebung mit der Haut auch an kritischen Stellen des menschlichen Bewegungsapparates gewährleistet.

Für besonders stark klebende Systeme basiert die Heißschmelzklebemasse bevorzugt auf Blockcopolymeren, insbesondere A-B-, A-B-A-Blockcopolymeren oder deren Mischungen. Die harte Phase A ist vornehmlich Polystyrol oder dessen Derivate, und die weiche Phase B enthält Ethylen, Propylen, Butylen, Butadien, Isopren oder deren Mischungen, hierbei besonders bevorzugt Ethylen und Butylen oder deren Mischungen.

Polystyrolblöcke können aber auch in der weichen Phase B enthalten sein, und zwar bis zu 20 Gew.-%. Der gesamte Styrolanteil sollte aber stets niedriger als 35 Gew.-% liegen. Bevorzugt werden Styrolanteile zwischen 5 Gew.-% und 30 Gew.-%, da ein niedrigerer Styrolanteil die Klebemasse anschmiegsamer macht.

Insbesondere die gezielte Abmischung von Di-Block- und Tri-Blockcopolymeren ist vorteilhaft, wobei ein Anteil an Di-Blockcopolymeren von kleiner 80 Gew.-% bevorzugt wird.

In einer vorteilhaften Ausführung weist die Heißschmelzklebemasse die nachfolgend angegebene Zusammensetzung auf:

| | |
|---|---|
| 10 Gew.-% bis 90 Gew.-% | Blockcopolymere, |

(fortgesetzt)

| 5 Gew.-% bis 80 Gew.-% | Klebrigmacher wie Öle, Wachse, Harze und/oder deren Mischungen, bevorzugt Mischungen aus Harzen und Ölen, |
|---|---|
| weniger als 60 Gew.-% | Weichmacher, |
| weniger als 15 Gew.-% | Additive, |
| weniger als 5 Gew.-% | Stabilisatoren. |

Die als Klebrigmacher dienenden aliphatischen oder aromatischen Öle, Wachse und Harze sind bevorzugt Kohlenwasserstofföle, -wachse und -harze, wobei sich die Öle, wie Paraffinkohlenwasserstofföle, oder die Wachse, wie Paraffinkohlenwasserstoffwachse, durch ihre Konsistenz günstig auf die Hautverklebung auswirken. Als Weichmacher finden mittel- oder langkettige Fettsäuren und/oder deren Ester Verwendung. Diese Zusätze dienen dabei der Einstellung der Klebeeigenschaften und der Stabilität. Gegebenenfalls kommen weitere Stabilisatoren und andere Hilfsstoffe zum Einsatz.

Ein Füllen der Klebemasse mit mineralischen Füllstoffen, Fasern, Mikrohohl- oder -vollkugeln ist möglich.

Insbesondere an medizinische Trägermaterialien werden hohe Anforderungen bezüglich der Klebeeigenschaften gestellt. Für eine ideale Anwendung sollte die Heißschmelzklebemasse eine hohe Anfaßklebrigkeit besitzen. Die funktionsangepaßte Klebkraft auf der Haut und auf der Trägerrückseite sollte vorhanden sein. Weiterhin ist, damit es zu keinem Verrutschen kommt, eine hohe Scherfestigkeit der Heißschmelzklebemasse notwendig. Durch die gezielte Absenkung der Glasübergangstemperatur der Klebemasse infolge der Auswahl der Klebrigmacher, der Weichmacher sowie der Polymermolekülgröße und der Molekularverteilung der Einsatzkomponenten wird die notwendige funktionsgerechte Verklebung mit der Haut und der Trägerrückseite erreicht. Die hohe Scherfestigkeit der Klebemasse wird durch die hohe Kohäsivität des Blockcopolymeren erreicht. Die gute Anfaßklebrigkeit ergibt sich durch die eingesetzte Palette an Klebrigmachern und Weichmachern.

Die Produkteigenschaften wie Anfaßklebrigkeit, Glasübergangstemperatur und Scherstabilität lassen sich mit Hilfe einer dynamisch-mechanischen Frequenzmessung gut quantifizieren. Hierbei wird ein schubspannungsgesteuertes Rheometer verwendet.

Die Ergebnisse dieser Meßmethode geben Auskunft über die physikalischen Eigenschaften eines Stoffes durch die Berücksichtigung des viskoelastischen Anteils. Hierbei wird bei einer vorgegebenen Temperatur die Heißschmelzklebemasse zwischen zwei planparallelen Platten mit variablen Frequenzen und geringer Verformung (linear viskoelastischer Bereich) in Schwingungen versetzt. Ober eine Aufnahmesteuerung wird computerunterstützt der Quotient (Q = tan δ) zwischen dem Verlustmodul (G" viskoser Anteil) und dem Speichermodul (G' elastischer Anteil) ermittelt

$$Q = \tan \delta = G''/G'$$

Für das subjektive Empfinden der Anfaßklebrigkeit (Tack) wird eine hohe Frequenz gewählt sowie für die Scherfestigkeit eine niedrige Frequenz.

Ein hoher Zahlenwert bedeutet eine bessere Anfaßklebrigkeit und eine schlechtere Scherstabilität.

Die Glasübergangstemperatur ist die Temperatur, bei der amorphe oder teilkristalline Polymere vom flüssigen oder gummielastischen Zustand in den hartelastischen oder glasigen Zustand übergehen oder umgekehrt (Römpp Chemie-Lexikon, 9. Aufl., Band 2, Seite 1587, Georg Thieme Verlag Stuttgart - New York, 1990). Er entspricht dem Maximum der Temperaturfunktion bei vorgegebener Frequenz.

Besonders für medizinische Anwendungen ist ein relativ niedriger Glasübergangspunkt notwendig.

| Bezeichnung | $T_G$ [0,1 rad s$^{-1}$] niedrige Frequenz | Anschmiegsamkeit niedrige Frequenz/RT [0,1 rad s$^{-1}$] | Anfaßklebrigkeit hohe Frequenz/RT [100 rad s$^{-1}$] |
|---|---|---|---|
| Heißschmelzklebemasse A | -8 ± 2 °C | tan δ = 0,59 ± 0,03 | tan δ = 1,87 ± 0,03 |
| Heißschmelzklebemasse B | -12 ± 2 °C | tan δ = 0,17 ± 0,03 | tan δ = 1,68 ± 0,03 |

Die Heißschmelzklebemassen sind vorzugsweise so eingestellt, daß sie bei einer Frequenz von 0,1 rad/s eine dynamisch-komplexe Glasübergangstemperatur von weniger als 15 °C, bevorzugt von 5 °C bis -30 °C, ganz besonders bevorzugt von -3 °C bis -15 °C, aufweisen.

Bevorzugt werden erfindungsgemäß Heißschmelzklebemassen, bei denen das Verhältnis des viskosen Anteils zum elastischen Anteil bei einer Frequenz von 100 rad/s bei 25 °C größer 0,7, besonders zwischen 1,0 und 5,0, ist, oder Heißschmelzklebemassen, bei denen das Verhältnis des viskosen Anteils zum elastischen Anteil bei einer Frequenz von 0,1 rad/s bei 25 °C kleiner 0,9 ist, bevorzugt zwischen 0,7 und 0,02, ganz besonders bevorzugt zwischen 0,6 und 0,1.

Als Trägermaterialien eignen sich alle starren und elastischen Flächengebilde aus synthetischen und natürlichen Rohstoffen. Bevorzugt sind Trägermaterialien, die nach Applikation der Klebemasse so eingesetzt werden können, daß sie technische Anforderungen oder die Eigenschaften eines funktionsgerechten Verbandes erfüllen. Beispielhaft sind Textilien wie Gewebe, Gewirke, Gelege, Vliese, Laminate, Netze, Folien, Schäume und Papiere aufgeführt. Weiter können diese Materialien vor- beziehungsweise nachbehandelt werden. Gängige Vorbehandlungen sind Corona und Hydrophobieren; geläufige Nachbehandlungen sind Kalandern, Tempern, Kaschieren, Stanzen und Eindekken.

Auch ein nachträgliches Kalandern des beschichteten Produktes und/oder eine Vorbehandlung des Trägers, wie Coronabestrahlung, zur besseren Verankerung der Klebeschicht kann vorteilhaft sein.

Weiterhin kann eine Behandlung der Heißschmelzklebemasse mit einer Elektronenstrahl-Nachvernetzung oder einer UV-Bestrahlung zu einer Verbesserung der gewünschten Eigenschaften führen.

Das Trägermaterial wird bevorzugt mit einer Geschwindigkeit von größer 2 m/min, bevorzugt 20 bis 200 m/min, beschichtet.

Der prozentuale Anteil, der mit der Heißschmelzklebemasse beschichteten Fläche sollte mindestens 30 % betragen und kann bis zu ungefähr 99 % reichen, für spezielle Produkte bevorzugt 40 % bis 95 %, besonders bevorzugt 50 % bis 92 %. Dieses kann gegebenenfalls durch Mehrfachapplikation erreicht werden, wobei gegebenenfalls auch Heißschmelzklebemassen mit unterschiedlichen Eigenschaften eingesetzt werden können.

Der partielle Auftrag ermöglicht durch geregelte Kanäle die Abführung des transepidermalen Wasserverlustes und verbessert das Ausdampfen der Haut beim Schwitzen insbesondere bei der Verwendung von luft- und wasserdampfdurchlässigen Trägermaterialien. Hierdurch werden Hautirritationen, die durch Stauungen der Körperflüssigkeiten hervorgerufen werden, vermieden. Die angelegten Abführungskanäle ermöglichen ein Ableiten auch unter Verwendung eines mehrlagigen Verbandes.

In einer bevorzugten Ausführungsform des erfindungsgemäßen Verfahrens weist das so beschichtete Trägermaterial eine Luftdurchlässigkeit von größer 1 $cm^3/(cm^2{*}s)$ auf, bevorzugt 10 bis 250 $cm^3/(cm^2{*}s)$, und/oder eine Wasserdampfdurchlässigkeit von größer 500 $g/(m^2{*}24h)$, bevorzugt 1000 bis 5000 $g/(m^2{*}24h)$.

In einer weiteren bevorzugten Ausführungsform des erfindungsgemäßen Verfahrens weist das so beschichtete Trägermaterial auf Stahl eine Klebkraft auf der Trägerrückseite von mindestens 0,5 N/cm auf, besonders eine Klebkraft zwischen 2 N/cm und 20 N/cm.

Die Epilation entsprechender Körperregionen und der Massetransfer auf die Haut sind aufgrund der hohen Kohäsivität des Klebers vernachlässigbar, weil der Kleber nicht an Haut und Haar verankert, vielmehr ist die Verankerung der Klebemasse auf dem Trägermaterial mit bis zu 20 N/cm (Probenbreite) für medizinische Anwendungen gut.

Die hervorragenden Eigenschaften des erfindungsgemäßen, selbstklebend ausgerüsteten Trägermaterials legen die Verwendung für medizinische Produkte, insbesondere Pflaster, medizinische Fixierungen, Wundabdeckungen, wirkstoffhaltige Systeme, orthopädische oder phlebologische Bandagen und Binden nahe.

Schließlich kann das Trägermaterial nach dem Beschichtungsvorgang mit einem klebstoffabweisenden Trägermaterial, wie silikonisiertes Papier, eingedeckt oder mit einer Wundauflage oder einer Polsterung versehen werden.

Besonders vorteilhaft ist, wenn das Trägermaterial sterilisierbar, bevorzugt gamma-sterilisierbar, ist. So sind besonders geeignet für eine nachträgliche Sterilisation Heißschmelzklebemassen auf Blockcopolymerbasis, welche keine Doppelbindungen enthalten. Dieses gilt insbesondere für Styrol-Butylen-Ethylen-Styrol-Blockcopolymerisate oder Styrol-Butylen-Styrol-Blockcopolymerisate. Es treten hierbei keine für die Anwendung signifikanten Änderungen in den Klebeeigenschaften auf.

Anhand mehrerer Figuren sollen vorteilhafte Ausführungsformen des Erfindungsgegenstandes dargestellt werden, ohne damit die Erfindung unnötig beschränken zu wollen.

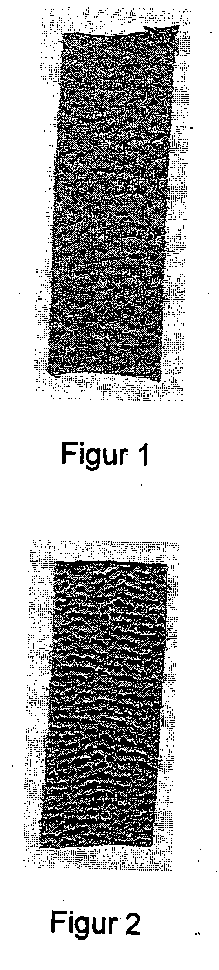

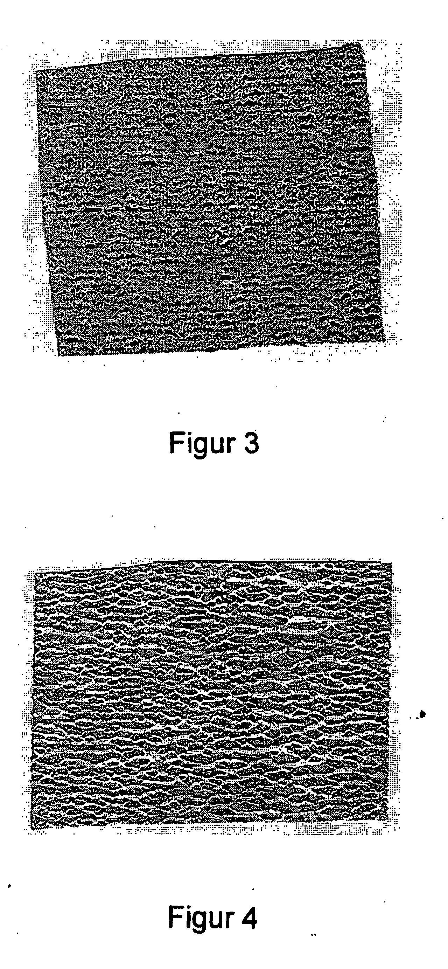

Es zeigen die Figuren 1 bis 4 fotographische Wiedergaben verschiedener Muster, die nach dem erfindungsgemäßen Verfahren gefertigt worden sind. Eine Schmelzhaftklebemasse wurde so mittels einer Auftragsvorrichtung auf eine sich bewegende Übertragungsvorrichtung aufgebracht, daß der aus der Schmelzklebemasse gebildete Film Fehlstellen aufweist.

Die Auftragsvorrichtung bestand aus einer Düse und die Übertragungsvorrichtung aus einer Walze. Die Düse kann dabei so eingestellt werden, daß sich der Düsenspalt exakt über der Walze befindet, also die Walzenachse und der Düsenspalt in der vertikal ausgerichteten Ebene durch die Walzenachse liegen ("against roll" Beschichtung genannt).

Die Düse kann auch so an die Walze gefahren werden, daß die Düse nicht exakt über der Walze steht, also der Düsenspalt und die Walzenachse in einer Ebene liegen, die bezogen auf die vertikal ausgerichtete Ebene einen Winkel aufweist ("off roll" Beschichtung genannt).

Des weiteren kann die Düse in einem bestimmten Neigungswinkel angeordnet werden.

In den Figuren wurde ein Viscoseträger direkt mit einem partiellen Auftrag von Schmelzhaftkleber versehen.

Dabei wurden folgende Parameter gewählt:

Auftragsvorrichtung: Rollstabdüse (Fa. Bematec)
Schmelzhaftkleber: Durotak H 1505 (National Starch & Chemical)
Position der Düse: 6 Uhr
Trägermaterial: 100 % Viscose, Dicke 100 μm
Spalt: 2 mm
Temperatur des Trägermaterials: 50 °C

Folgende Parameter wurden innerhalb der Figuren 1 bis 4 variiert:

**Figur 1:**

| Düsenposition | against roll |
|---|---|
| Temperatur Schmelzhaftkleber | 110 bis 115 °C |
| Bahngeschwindigkeit | 10 m/min |
| Auftrag Schmelzhaftkleber | 60 g/m$^2$ |

**Figur 2:**

| Düsenposition | against roll |
|---|---|
| Temperatur Schmelzhaftkleber | 110 bis 115 °C |
| Bahngeschwindigkeit | 5 m/min |
| Auftrag Schmelzhaftkleber | 80 g/m$^2$ |

**Figur 3:**

| Düsenposition | off roll |
|---|---|
| Temperatur Schmelzhaftkleber | 140 °C |
| Bahngeschwindigkeit | 30 m/min |
| Auftrag Schmelzhaftkleber | 90 g/m$^2$ |

**Figur 4:**

| Düsenposition | against roll |
|---|---|
| Temperatur Schmelzhaftkleber | 110 °C |
| Bahngeschwindigkeit | 5 m/min |
| Auftrag Schmelzhaftkleber | 40 g/m$^2$ |

Je nach ausgewählter Parameterkombination ergab sich auf dem Trägermaterial jeweils ein Film aus der Schmelzklebemasse, der unterschiedliche Arten von Fehlstellen aufwies.

Zum einen traten Fehlstellen auf, die die Form von Löchern hatten, zum anderen bildeten sich netzartige Strukturen aus Fehlstellen, wobei außerhalb des Netzes der Schmelzhaftkleber angeordnet war.

Alle nach dem erfindungsgemäßen Verfahren hergestellten Trägermaterialen wiesen bei der Applikation als Pflaster verbesserte Eigenschaften auf bezüglich der Atmungsaktivität beziehungsweise der Wasserdampfdurchlässigkeit, die derart vom Fachmann nicht zu erwarten gewesen sind.

**Patentansprüche**

1.  Verfahren zum partiellen Auftragen von einer Schmelzhaftklebemasse auf ein Trägermaterial, wobei

    •   die Schmelzhaftklebemasse mittels einer Auftragsvorrichtung so auf eine sich bewegende Übertragungsvorrichtung aufgebracht wird, dass ein aus der Schmelzklebemasse gebildeter Film Fehlstellen aufweist und
    •   der auf der Übertragungsvorrichtung aufgelegte Film auf ein sich ebenfalls bewegendes Trägermaterial aufgebracht wird, **dadurch gekennzeichnet, dass** der aufgebrachte Film durch voreinstellbare mechanische Belastung über seine Reißgrenze gedehnt wird.

2.  Verfahren zum partiellen Auftragen von einer Schmelzhaftklebemasse auf ein Trägermaterial, wobei die Schmelzhaftklebemasse mittels einer Auftragsvorrichtung so auf ein sich bewegendes Trägermaterial aufgebracht wird, dass ein aus der Schmelzklebemasse gebildete Film Fehlstellen aufweist, **dadurch gekennzeichnet, dass** der aufgebrachte Film durch voreinstellbare mechanische Belastung über seine Reißgrenze gedehnt wird.

3.  Verfahren nach den Ansprüchen 1 oder 2, **dadurch gekennzeichnet, daß** die Auftragsvorrichtung eine Breitschlitzdüse und/oder die Übertragungsvorrichtung eine Walze ist.

4.  Verfahren nach den Ansprüchen 1 bis 3, **dadurch gekennzeichnet, daß** der prozentuale Anteil der mit der Heißschmelzklebemasse beschichteten Fläche zwischen 30 % und 99 % beträgt, bevorzugt 40 % bis 95 %, besonders bevorzugt 50 % bis 92 %.

5.  Verfahren nach den Ansprüchen 1 bis 4, **dadurch gekennzeichnet, daß** der Film der Schmelzhaftklebemasse durch Zug- und Scherkräfte, die proportional zur Geschwindigkeitsdifferenz zwischen Film der Schmelzhaftklebemasse und Trägermaterial oder Übertragsvorrichtung sind, über seine Reißgrenze gedehnt wird und aufreißt, so daß der aus der Schmelzklebemasse gebildete Film Fehlstellen aufweist.

**Claims**

1.  Method of partially applying a hot-melt pressure sensitive adhesive composition to a backing material, in which

    •   the hot-melt pressure sensitive adhesive composition is applied by an applicator to a moving transfer means in such a way that a film formed from the hot-melt adhesive composition comprises voids and
    •   the film applied to the transfer means is subsequently applied to a backing material, which is likewise moving, **characterized in that** the applied film is extended beyond its yield point by presettable mechanical load.

2.  Method of partially applying a hot-melt pressure sensitive adhesive composition to a backing material, in which the hot-melt pressure sensitive adhesive composition is applied by means of an applicator to a moving backing material in such a way that a film formed from the hot-melt adhesive composition comprises voids, **characterized in that** the applied film is extended beyond its yield point by presettable mechanical load.

3.  Method according to Claim 1 or 2, **characterized in that** the applicator is a slot die and/or the transfer means is a roll.

4.  Method according to any of Claims 1 to 3, **characterized in that** the percentage fraction of the area coated with the hot-melt adhesive composition is between 30% and 99%, preferably from 40% to 95%, with particular preference from 50% to 92%.

5.  Method according to any of Claims 1 to 4, **characterized in that** the film of the hot-melt pressure sensitive adhesive composition is extended beyond its yield point by tensile and shear forces which are proportional to the difference in speed between the film of the hot-melt pressure sensitive adhesive composition and the backing material or transfer means, and tears, so that the film formed from the hot-melt adhesive composition has voids.

**Revendications**

1.  Procédé en vue de l'application partielle d'une masse autoadhésive à l'état fondu sur un matériau de support,

- la masse autoadhésive à l'état fondu étant appliquée à l'aide d'un dispositif d'application sur un dispositif de transfert en mouvement de telle sorte qu'un film formé à partir de la masse autoadhésive à l'état fondu présente des défauts et
- le film posé sur le dispositif de transfert étant appliqué sur un matériau de support également en mouvement, **caractérisé en ce que** le film appliqué est étiré au-delà de sa limite de déchirement par une sollicitation mécanique réglable au préalable.

2. Procédé en vue de l'application partielle d'une masse autoadhésive à l'état fondu sur un matériau de support, la masse autoadhésive à l'état fondu étant appliquée sur un matériau de support en mouvement à l'aide d'un dispositif d'application de telle sorte que le film formé à partir de la masse autoadhésive à l'état fondu présente des défauts, **caractérisé en ce que** le film appliqué est étiré au-delà de sa limite de déchirement par une sollicitation mécanique réglable au préalable.

3. Procédé selon les revendications 1 ou 2, **caractérisé en ce que** le dispositif d'application est une buse à fente large et/ou **en ce que** le dispositif de transfert est un rouleau.

4. Procédé selon les revendications 1 à 3, **caractérisé en ce que** la proportion en pourcentage de la surface revêtue de la masse chaude autoadhésive à l'état fondu est comprise entre 30 % et 99 %, de préférence, entre 40 % et 95 %, en particulier, de préférence, entre 50 % et 92 %.

5. Procédé selon les revendications 1 à 4, **caractérisé en ce que** le film de masse autoadhésive à l'état fondu est étiré au-delà de sa limite de déchirement par des forces de traction et de cisaillement, qui sont proportionnelles à la différence de vitesse entre le film de la masse autoadhésive à l'état fondu et le matériau de support ou le dispositif de transfert, et se déchire de telle sorte que le film formé à partir de la masse autoadhésive à l'état fondu présente des défauts.

## Figur 1

## Figur 2

Figur 3

Figur 4